# EUROPEAN PATENT APPLICATION

(11) **EP 0 626 326 A2**
(43) Date of publication of application: **30.11.1994**
(21) Application number: 94107921.2
(22) Date of filing: 24.05.1994
(51) Int. Cl.: B65G 15/16, B65G 21/10

(54) **Belt conveyor**

(30) Priority: 24.05.1993 JP 121074/93
(71) Applicant: Bridgestone Corporation, Tokyo (JP)
(72) Inventor: Kuroda, Kimihide, Residence Byoga 402, Kitakyushu-shi, Fukuoka-ken (JP)
(74) Representative: Weitzel, Wolfgang, Dr.-Ing. Patentanwalt

(57) **Abstract**

Material is conveyed on a belt coveyor which is wound around a pair of end rollers (23) which comprises front (2) and rear (3) end rollers which are rotatably mounted to front (A2) and rear (A1) frames. An intermediate frame (A3) is provided between the front and rear frames (A1,A2). At least one of the front and rear frames (A1,A2) is adjustably connected to the intermediate frame (A3) so as to change an angle with respect to the intermediate frame, thereby facilitating its installation.

## Description

### BACKGROUND OF THE INVENTION

The present invention relates to a belt conveyor in which an endless conveyor belt is wound around a pair of rollers rotatably mounted to a frame and rotated to convey material by drive means provided on the frame, and especially to a belt conveyor in which material held between a conveyor belt and a press belt is conveyed in a substantially vertical direction.

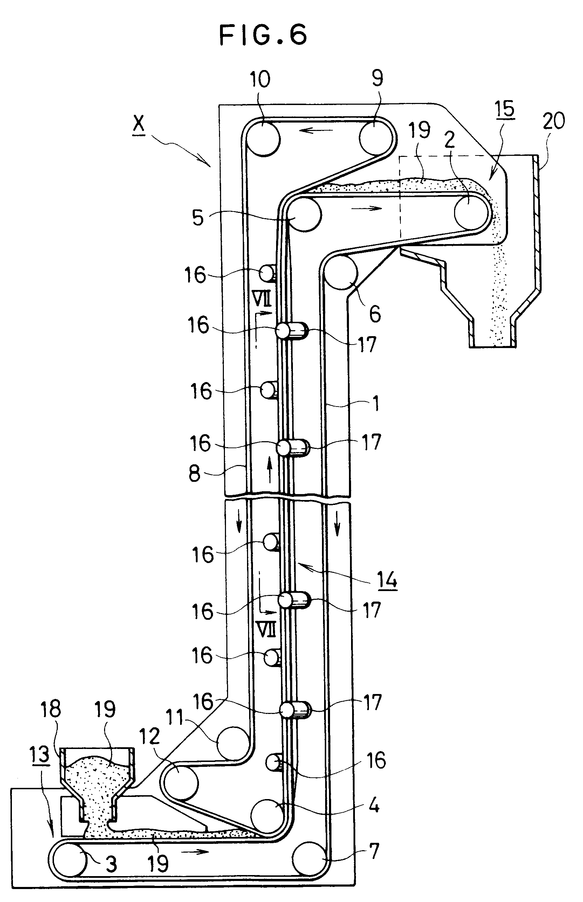

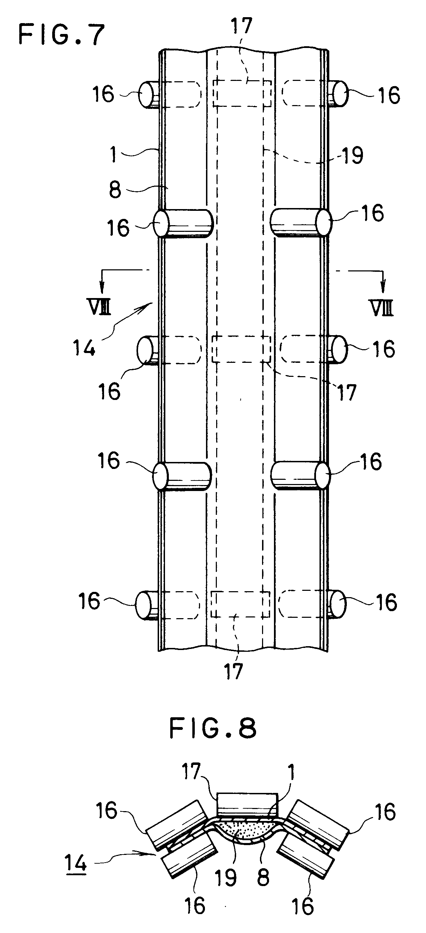

Figs. 6 to 8 illustrate a conventional belt conveyor, in which depending on the situation of supply and discharge sides of material to be conveyed, there is provided a frame such as Z-shape on which there are provided a plurality of rollers for guiding a conveyor belt 1 and a press belt 8. The conveyor belt 1 which comprises an endless flat belt is wound around a front end roller 2 driven by a motor (not shown); a rear end roller 3; and intermediate guide rollers 4, 5, 6 and 7.

The endless flat press belt 8 is wound around the guide rollers 4, 5, 9, 10, 11 and 12 and runs in a direction of an arrow with frictional force by overlapping it on the conveyor belt 1 between the guide rollers 4 and 5. In the guide rollers 9, 10, 11 and 12, the guide roller 9 is a front end sub-roller, and the guide roller 12 is a rear end sub-roller.

Between the rear end roller 3 and the guide roller 4, there is provided a horizontal supply portion 13 of the conveyor belt 1; a vertical transfer portion between the guide rollers 4 and 5 of the belts 1 and 8; and a horizontal discharge portion 15 between the guide roller 5 and the front end roller 2 of the conveyor belt 1.

The belts 1 and 8 at the transfer portion 14 are alternately pressed by a plurality of horizontal short press rollers 16 supported on the frame "X" at a certain distance, and a back surface of forward path of the conveyor belt 1 is pressed by a plurality of horizontal short pressure rollers 17 which are rotatably mounted on the frame at a certain distance.

In the belt conveyor, granular or powdered material 19 is thrown down onto the supply portion 13 of the conveyor belt 1; is put into the belts 1 and 8 via the guide roller 4; is elevated in a substantially vertical direction; and is discharged into a hopper 20 from the discharge portion 15 in which the belts 1 and 8 are opened.

The belts 1 and 8 are pressed by the press roller 16, thereby preventing the transferred material 19 from leakage through the space between the belts 1 and 8. Pressing the conveyor belt 1 by the pressure rollers prevents the conveyor belt 1 from moving rearwards, and prevents the transferred material 19 held between the belts 1 and 8 from falling down, thereby elevating the material smoothly.

In the conventional belt conveyor as above, the frame "X" is a stationary type, and its vertical size and the angle of the transfer portion 14 are determined depending on the surrounding situation, thereby requiring complicate operation and a lot of time and persons, which is expensive.

The object of the present invention is to provide a belt conveyor in which the angle of a transfer portion is freely variable depending on the situation of a place, thereby facilitating assembling and disassembling, the conveyor being convenient in transportation.

### SUMMARY OF THE INVENTION

To achieve the object, there is provided a belt conveyor in which an endless belt is wound around a pair of end rollers which comprises front and rear end rollers rotatably mounted to front and rear frames respectively, an intermediate frame being provided between the front and rear frames, the conveyor belt being rotated to convey material, characterized in that;
at least one of the front and rear frames is adjustably connected to the intermediate frame so as to change an angle with respect to the intermediate frame.

In a belt conveyor in which in addition to a conveyor belt, there is provided an endless press belt which partially runs with the conveyor belt so that material may be held and transferred between the two belts, front and rear end rollers of a press belt are rotatably mounted to front and rear frames respectively.

The intermediate frame may be made of a pair of parallel links which are connected with the front and rear frames to make a parallelogram link structure.

A guide roller for guiding a bent portion of the conveyor belt may be provided in at least one of the front and rear frames. In this case, a pivot axis on which at least one of the front and rear frames is mounted to the intermediate frame may be the same as the axis of the guide roller for guiding the bent portion of the conveyor belt.

At least one of the front and rear frames can be connected to the intermediate frame at a desired angle. Thus, when the frames are disposed, the intermediate frame is suitably inclined depending on the condition of the place and each frame may be fixed to stationary material, thereby carrying out simple and quick installation. An angle adjusting portion can be easily disassembled, which is convenient to transport it.

### BRIEF DESCRIPTION OF THE DRAWINGS

The features and advantages of the present invention will be described in detail based on the following embodiments with respect to drawings wherein:
Fig. 1 is a longitudinal sectional side view of the first embodiment of the present invention;
Fig. 2 is a side elevational view which shows an inclined intermediate frame;
Fig. 3 is a side elevational view of the second embodiment of the present invention;
Fig. 4 is a longitudinal sectional side view of the third embodiment of the present invention;
Fig. 5 is an exploded perspective view of the main portion of the present invention;
Fig. 6 is a longitudinal sectional side view of a conventional belt conveyor;
Fig. 7 is a view which is seen from the line VII-VII in Fig. 6; and
Fig. 8 is a sectional view taken along the line VIII-VIII in Fig. 7.

### DETAILED DESCRIPTION OF THE PREFERRED EMBODIMENTS

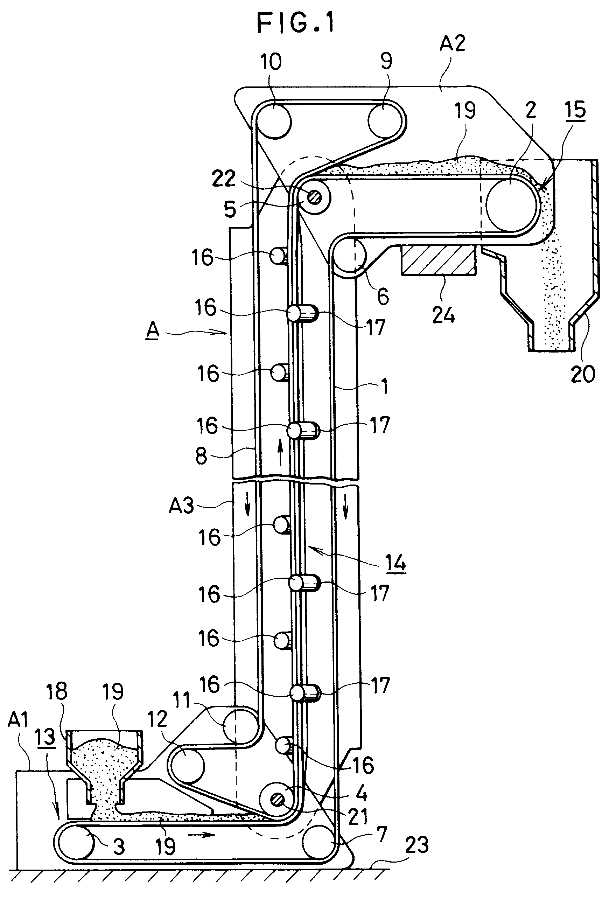

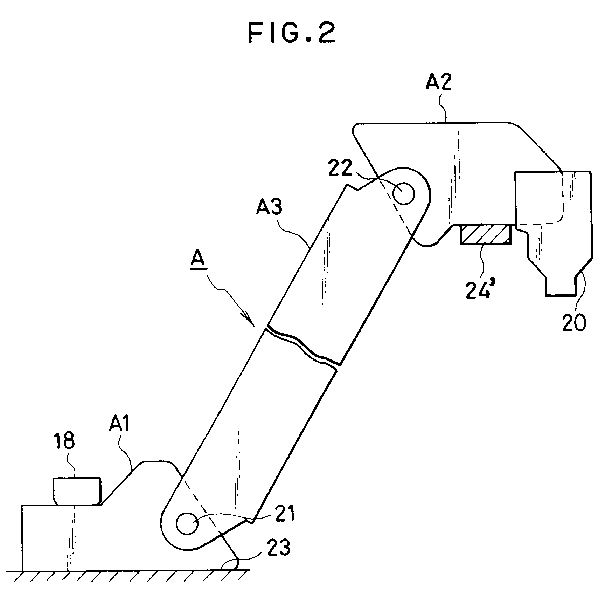

Figs. 1 and 2 illustrate the first embodiment in which a frame structure is different from a conventional one in Figs. 6 to 8, but the other inner structure is substantially the same as a conventional one. The same numerals are assigned to the same or similar members, and their detailed description will be omitted.

In this embodiment, a rear end roller 3, guide rollers 4, 7 and 11, a guide roller 12 which is a rear end sub-roller and a hopper 18 are mounted to a rear frame A1. A front roller 2, guide rollers 5, 6 and 10 and a guide roller 9 which is a front end sub-roller are mounted to a front frame A2. A press roller 16 and a pressure roller 17 are mounted to an intermediate frame A3. The front end of the rear frame A1 and the lower end of the intermediate frame A3 are rotatably mounted on a shaft 21 the axis of which is the same as that of the guide roller 4 for guiding bent portions of the belts 1 and 8. The rear end of the front frame A2 and the upper end of the intermediate frame A3 are mounted on a shaft 22 the axis of which is the same as that of the guide roller 5 for guiding bent portions of the belts 1 and 8. The front, rear and intermediate frames A2, A1 and A3 constitute a frame A.

In this embodiment, as shown in Fig. 1, the rear frame A1 is provided on a ground or floor; an intermediate frame A3 is vertically provided; and the front frame A2 is disposed or fixed on a maximum height receipt floor 24 having a receipt hopper 20. Material supplied through a supply hopper 18 is held between the belts 1 and 8 so that it may be continuously conveyed to the receipt hopper 20, and as shown in Fig. 2, when a receipt floor 24' is lower than the receipt floor 24, the rear frame A1 goes back on the ground 23 and the intermediate frame A3 is further inclined, so that the front frame A2 can be disposed on the lower receipt floor 24'.

As shown in this embodiment, the rear and front frames A1 and A2 are connected to the intermediate frame A3 by the shafts 21 and 22 the axes of which are the same as those of the guide rollers 4 and 5 for guiding the bent portions of the two belts 1 and 8, so that the lengths of the belts 1 and 8 are hardly changed even if the angle of the intermediate frame A3 is changed at the time of installation.

The structure for rotatably mounting the rear and front frames A1 and A2 with respect to the intermediate frame A3 is not limited to this embodiment, but may be rotatably mounted to portions different from the guide rollers 4 and 5. In this case, when the lengths of the belts 1 and 8 are changed owing to an angle of the intermediate frame A3, there may be provided tension adjusting means (not shown) for the belts 1 and 8 to move mounting position of the rear end roller 3 and the guide roller 12 with respect to the rear frame A1, thereby making the lengths of the belts 1 and 8 unchanged by adjustment thereof.

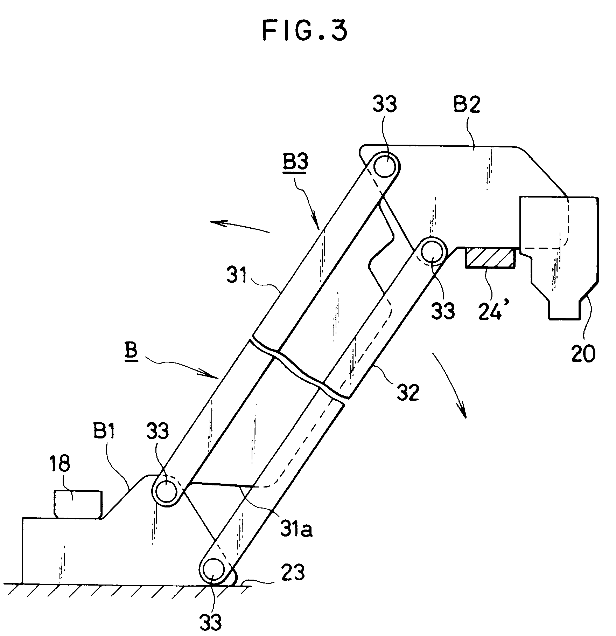

Fig. 3 illustrates the second embodiment of the present invention, in which an intermediate frame B3 of a frame B comprises a pair of parallel links 31 and 32 each end of which is connected to rear and front frames B1 and B2 via a transverse shaft 33 to make a parallelogram link structure.

The press roller 16 and the pressure roller 17 may be mounted to a projection 31a of the link 31 of the intermediate frame B3. The other structure is the same as that in the first embodiment.

In the second embodiment, the front frame B2 is kept in parallel with the rear frame B1, and if the rear frame B1 is kept horizontally, the front frame B3 may be kept horizontally as well, which is advantageous.

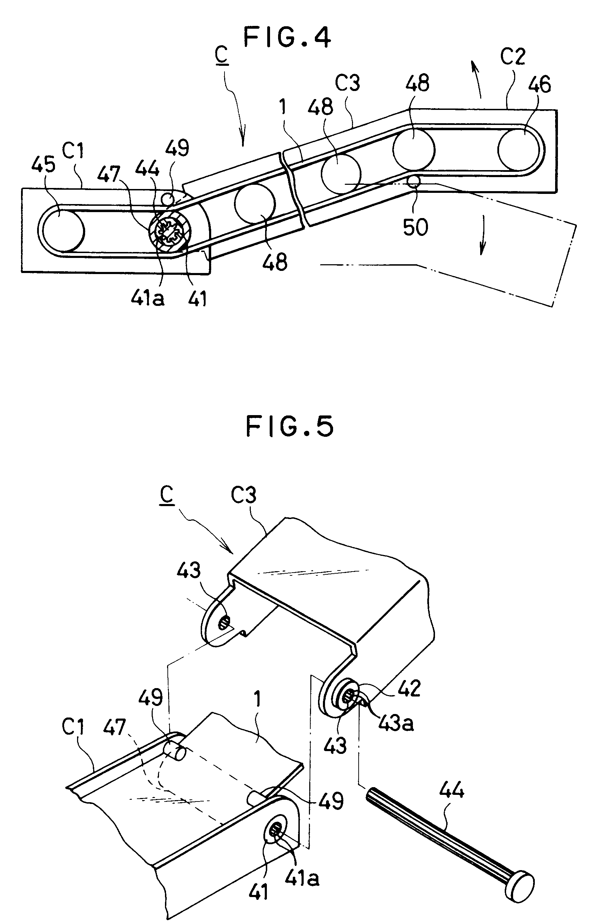

Figs. 4 and 5 illustrate the third embodiment of the present invention, in which a tube 41 having a plurality of spline grooves 41a therein is fixed to the rear end of a rear frame C1 of a frame C. Bosses 42 formed at the lower ends of an intermediate frame C3 are put over the ends of the tube 41, and a spline shaft 44 is inserted in a bore 43 having a spline groove 43a having the same shape and size as the spline groove 41a formed in the boss 42. Thus, the rear frame C1 is connected with the intermediate frame C3 adjustably in an angular direction stepwise at a distance of a pitch, so that the rear frame C1 is assembled or disassembled with the intermediate frame C3 by putting the spline shaft 44 in or pulling out.

The front frame C2 is integrally formed with the intermediate frame C3.

In this embodiment, a single endless flat conveyor belt 1 is wound around a rear end roller 45 rotatably mounted to the rear frame C1 and a front end roller 46 rotatably mounted to the front frame C2. One of the front and rear end rollers 45 and 46 is driven by drive means (not shown) to rotate the conveyor belt 1, and a plurality of guide rollers 47, 48, 49 and 50 for guiding the conveyor belt 1 are provided on the frame C.

The guide roller 47 rotatably surrounds the tube 41. The same advantages as the first embodiment could be achieved in the third embodiment.

The foregoing description merely relates to embodiments of the invention. Various modifications and changes may be made by person skilled in the art without departing from the scope of claims wherein:

## Claims

1. A belt conveyor in which an endless belt is wound around a pair of end rollers which comprises front and rear end rollers rotatably mounted to front and rear frames respectively, an intermediate frame being provided between the front and rear frames, the conveyor belt being rotated to convey material, characterized in that;
at least one of the front and rear frames is adjustably connected to the intermediate frame so as to change an angle with respect to the intermediate frame.

2. A belt conveyor as defined in claim 1 wherein there is provided a press belt which is partially overlapped on the conveyor belt so that the material may be held and conveyed between the conveyor and press belts, the press belt being wound around a pair of end rollers which comprise front and rear end sub-rollers rotatably mounted to the front and rear frames respectively.

3. A belt conveyor as defined in claim 1 or 2 wherein the intermediate frame comprises a pair of parallel links which are connected to the front and rear frames so as to form a parallelogram link.

4. A belt conveyor as defined in any of claims 1 to 3 wherein a guide roller for guiding a bent portion of the conveyor belt is provided on at least one of the front and rear frames.

5. A belt conveyor as defined in claim 4 wherein at least one of the front and rear frames is rotatably mounted to the intermediate frame with a pivot axis which is the same as an axis of the guide roller for guiding the conveyor belt.
